# FASCICULE DE BREVET EUROPEEN

(11) **EP 0 460 618 B1**
(45) Date de publication et mention de la délivrance du brevet: **02.02.1994**
(21) Numéro de dépôt: 91109138.7
(22) Date de dépôt: 04.06.1991
(51) Int. Cl.: A47J 27/21

(54) **Bouilloire électrique**
Elektrischer Wasserkessel
Electrical boiler

(30) Priorité: 06.06.1990 FR 9007024
(43) Date de publication de la demande: 11.12.1991
(73) Titulaire: MOULINEX, F-93170 Bagnolet (FR)
(72) Inventeur: Gough, Brian, c/o IDC Portland Business Center, Slough, Berkshire SL39EG (GB)
(74) Mandataire: May, Hans Ulrich, Dr.

(56) Documents cités:
- EP-A- 0 170 409
- DE-A- 3 222 542
- GB-A- 2 195 234
- JP-A-59 199 740
- US-A- 2 471 260

## Description

L'invention se rapporte aux bouilloires électriques comprenant un pot destiné à contenir de l'eau et dont les parois latérale et de fond sont réalisées en matière plastique, et une résistance chauffante apte à porter cette eau à ébullition, selon le préambule de la revendication 1.

Avec les bouilloires de ce type, on constate que le liquide porté à ébullition se refroidit trop rapidement du fait notamment de la déperdition de chaleur de la paroi latérale du pot au contact de l'air ambiant.

On connaît par le brevet GB-A-2 195 234 une bouilloire où le pot est entouré par une enveloppe dont les parois latérale est de fond sont également en matière plastique en entourent les parois latérale et de fond dudit pot en ménageant respectivement entre elles un matelas d'air. Dans cette bouilloire cependant, la paroi latérale de l'enveloppe est réalisée d'un seul tenant avec le pot intérieur porté à haute température, ce qui provoque une dilatation de ce pot et une déformation résultante de la paroi latérale par rapport aux parois de fond.

Selon l'invention, les parois latérales du pot étant entourées par une enveloppe dont les parois latérale et de fond sont également en matière plastique et entourent les parois latérale et de fond dudit pot en ménageant respectivement entre elles un espace d'air, lesdites parois latérales du pot et de l'enveloppe présentent dans leur région supérieure, des zones rapprochées comportant un moyen d'assemblage mutuel présentant un faible jeu de manière à accepter les dilations thermiques du pot et de l'enveloppe.

Ainsi, grâce à cette réalisation, on obtient à peu de frais, une bouilloire pratiquement isotherme. En outre, le léger jeu ménagé dans le moyen d'assemblage permet aux pièces plastiques de se dilater librement sans provoquer de déformation nuisible à l'esthétique de la bouilloire.

D'autres formes d'éxécution font l'objet des revendications dépendantes.

Les caractéristiques et avantages de l'invention ressortiront d'ailleurs de la description qui va suivre, à titre d'exemple, en référence aux dessins annexés dans lesquels :

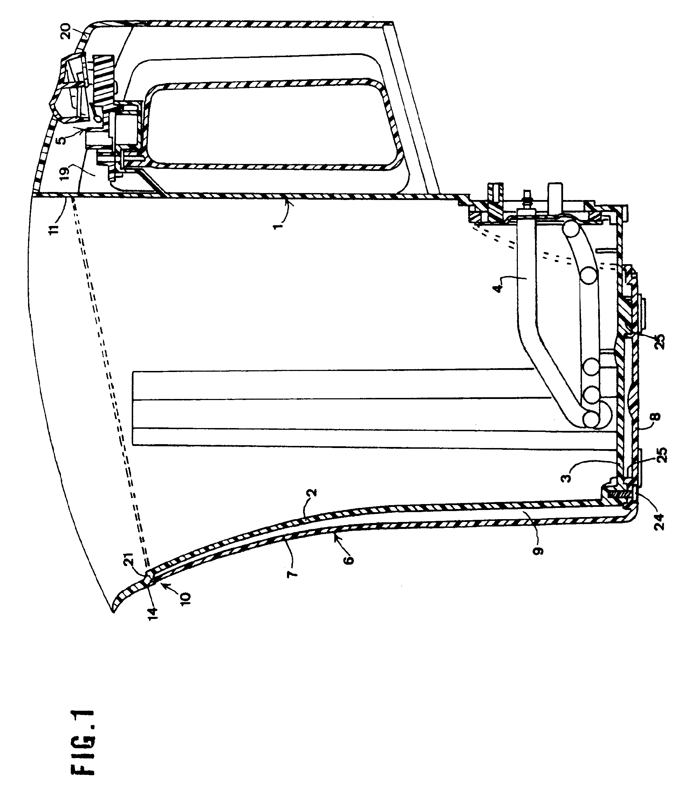

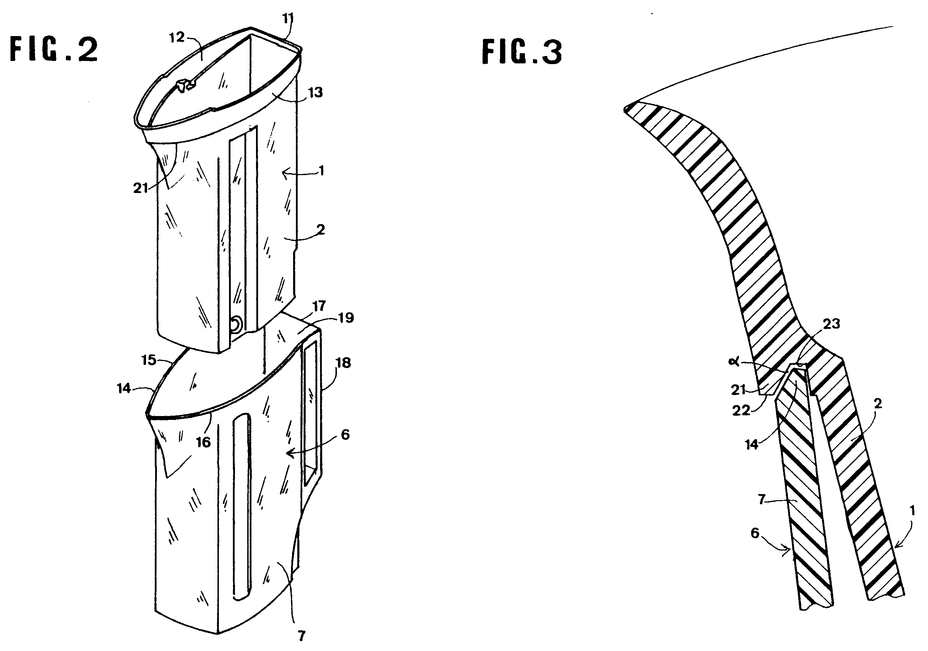

la figure 1 est une vue en coupe d'une bouilloire selon l'invention ; la figure 2 est une vue en perspective éclatée , à plus petite échelle, illustrant le pot et une enveloppe avant leur assemblage ; la figure 3 représente, à plus grande échelle, le moyen d'assemblage du pot et de l'enveloppe illustré en coupe à la figure 1.

La bouilloire électrique représentée à la figure 1 comprend un pot 1 destiné à contenir de l'eau et dont les parois latérale 2 et de fond 3 sont réalisées en matière plastique, une résistance chauffante 4 apte à porter cette eau à ébullition, ainsi qu'un couvercle (non représenté) destiné à fermer ledit pot 1. Une bouilloire de ce type est équipée des éléments classiques 5 de commande de l'alimentation électrique de la résistance 4 tels que, thermostat, interrupteurs de mise en marche et de sécurité commandé par un détecteur de vapeur.

Selon l'invention, le pot 1 est entouré par une enveloppe 6 dont les parois latérale 7 et de fond 8 sont également en matière plastique et entourent les parois latérale 2 et de fond 3 du pot 1, en ménageant respectivement entre elles un espace d'air 9, lesdites parois latérales du pot 1 et de l'enveloppe 6 présentant dans leur région supérieure, des zones rapprochées comportant un moyen d'assemblage mutuel 10 présentant un faible jeu α de manière à accepter les dilations thermiques du pot 1 et de l'enveloppe 6.

Comme illustré à la figure 2, la région supérieure de la zone latérale du pot 1 présente un contour de forme générale triangulaire ayant une base 11 et deux côtés bombés 12 et 13 rattachés au sommet pour former une goulotte de déversement, et l'enveloppe 6 comporte un bord supérieur 14 de contour triangulaire semblable au contour de la région supérieure du pot 1 et présentant deux côtés 15, 16 qui, lors du montage, sont rapprochés des côtés 12, 13 du pot, tandis que la base 17 est située à distance de la base 11 du pot de manière à ménager une poignée 18 comportant un logement 19 de réception pour des éléments de commande 5, ledit logement 19 étant fermé par un couvercle 20 (représenté à la figure 1).

Comme on le voit mieux sur la figure 3, la zone latérale du pot 1 rapprochée de celle de l'enveloppe 6 présente un épaulement horizontal 21 s'étendant le long des côtés 12, 13 et dont la face 22, tournée vers le bas, comporte une rainure 23 ouverte vers le bas et ayant une section de forme générale trapézoïdale, tandis que le bord supérieur 14 de la paroi latérale 7 de l'enveloppe 6 présente, en section, le long de ses côtés 15, 16, rapprochés des côtés 12, 13, une forme pratiquement complémentaire à celle de la rainure.

La bouilloire est donc réalisée par l'emboîtement du pot 1 dans l'enveloppe 6 jusqu'à obtention de l'assemblage du bord supérieur 14 avec la rainure 23, puis ladite enveloppe est maintenue autour du pot par des moyens de fixation tels que des vis 24 et entretoises 25 interposées entre les fonds 3 et 8 du pot 1 et de l'enveloppe 6. Ces entretoises 25 contribuent à maintenir l'espace d'air 9 entre les fonds du pot et de l'enveloppe.

Ainsi, il s'avère que cette construction de la bouilloire est particulièrement intéressante, non seulement, pour une fabrication en grande série, exigeant un montage pratiquement automatique des pièces, mais aussi, du point de vue du coût de réalisation, car elle permet d'utiliser comme matière plastique, pour le pot et l'enveloppe un polypropylène. Comme on le comprendra, le léger jeu α laissé entre le bord supérieur 14 et la rainure 23, autorise les dilatations thermiques différentes de l'enveloppe 6 et du pot 1 contenant l'eau bouillante sans provoquer de contrainte entre eux. En outre, l'engagement du bord 14 dans la rainure 23 ouverte vers le bas, réalise également un assemblage pratiquement étanche au liquide qui ne peut pénétrer ainsi entre le pot et l'enveloppe dans le cas d'une utilisation normale de la bouilloire (remplissage, versage, débordement ...), mais qui permet cependant à l'air contenu dans l'espace 9 de s'échapper lorsqu'il est surchauffé, l'enveloppe 6 restant ainsi à la température ambiante.

## Revendications

1. Bouilloire comprenant un pot (1), destiné à contenir de l'eau et dont les parois latérale (2) et de fond (3) sont réalisées en matière plastique, et une résistance chauffante (4) apte à porter cette eau à ébullition, ledit pot étant entouré par une enveloppe (6) dont les parois latérale (7) et de fond (8) sont également en matière plastique et entourent les parois latérale (2) et de fond (3) dudit pot en ménageant respectivement entre elles un espace d'air (9),
**caractérisée en ce que** les parois latérales du pot (1) et de l'enveloppe (6) présentent dans leur région supérieure des zones rapprochées comportant un moyen d'assemblage mutuel (10) présentant un faible jeu (α) de manière à accepter les dilatations thermiques du pot (1) et de l'enveloppe (6).

2. Bouilloire selon la revendication 1,
**caractérisée en ce que** le moyen d'assemblage mutuel (10) est formé par une rainure (23) qui est pratiquée dans la zone latérale du pot rapprochée de celle de l'enveloppe et dont l'ouverture est tournée vers le bas, et par le bord supérieur de la zone latérale rapprochée de l'enveloppe qui présente, en section, une forme complémentaire à celle de la rainure.

3. Bouilloire selon la revendication 2,
**caractérisée en ce que** la zone latérale du pot (1) rapprochée de celle de l'enveloppe (6) présente un épaulement horizontal (21) dont la face (22), tournée vers le bas, comporte la rainure.

4. Bouilloire selon l'une quelconque des revendications précédentes,
**caractérisée en ce que** l'enveloppe (6) est maintenue autour du pot (1) par des moyens de fixation (24) et entretoises (25) interposés entre les fonds (3 et 8) du pot et de l'enveloppe.

5. Bouilloire selon l'une quelconque des revendications précédentes,
**caractérisée en ce que** la matière plastique utilisée pour le pot (1) et l'enveloppe (6) est un polypropylène.

## Claims

1. A kettle comprising a jug (1), intended to contain water and the lateral (2) and bottom (3) walls of which are made from plastic material, and a heating resistor (4) capable of bringing this water to boiling point, said jug being surrounded by a shell (6), the lateral (7) and bottom (8) walls of which are also made from plastic material and surround the lateral (2) and bottom (3) walls of said jug whilst providing respectively between them an air space (9),
**characterised in that** the lateral walls of the jug (1) and of the shell (6) have in their upper region closely spaced zones comprising a mutual assembly means (10) having slight clearance (α) in order to provide for the thermal expansion of the jug (1) and of the shell (6).

2. A kettle according to Claim 1,
**characterised in that** the mutual assembly means (10) is formed by a groove (23) which is provided in the lateral zone of the jug close to that of the shell and the aperture of which is turned downwards, and by the upper edge of the lateral zone close to the shell which has, in section, a shape complementing that of the groove.

3. A kettle according to Claim 2,
**characterised in that** the lateral zone of the jug (1) close to that of the shell (6) has a horizontal collar (21), the downwardly turned face (22) of which comprises the groove.

4. A kettle according to any one of the preceding Claims,
**characterised in that** the shell (6) is held around the jug (1) by attachment means (24) and distance pieces (25) inserted between the bottom wall (3 and 8) of the jug and of the shell.

5. A kettle according to any one of the preceding Claims,
**characterised in that** the plastic material used for the jug (1) and the shell (6) is polypropylene.

## Patentansprüche

1. Wasserkessel mit einem zur Aufnahme des Wassers dienenden Topf (1) dessen Seitenwand (2) und Bodenwand (3) aus Kunststoff bestehen, und einem Heizwiderstand (4), der dieses Wasser zum Sieden bringen kann, wobei der Topf von einem Mantel (6) umgeben ist, dessen Seitenwand (7) und Bodenwand (8) ebenfalls aus Kunststoff bestehen und die Seitenwand (2) und Bodenwand (3) des Topfes umgeben, wobei zwischen diesen jeweils ein Luftraum (9) bleibt, **dadurch gekennzeichnet,** daß die Seitenwände des Topfes (1) und des Mantels (6) in ihrem oberen Bereich einander angenäherte Zonen mit einer Verbindungsvorrichtung (10) zur Vereinigung miteinander aufweisen, welche ein geringes Spiel (α) aufweist, um Wärmeausdehnungen des Topfes (1) und des Mantels (6) aufzunehmen.

2. Wasserkessel nach Anspruch 1, **dadurch gekennzeichnet,** daß die Verbindungsvorrichtung (10) von einer Nut (23), die im Seitenbereich des Topfes ausgebildet ist, der dem Seitenbereich des Mantels angenähert ist und dessen Öffnung nach unten gerichtet ist, und von der Oberkante des angenäherten Seitenbereichs des Mantels, der im Schnitt eine zur Form der Nut komplementäre Form aufweist, gebildet ist.

3. Wasserkessel nach Anspruch 2, **dadurch gekennzeichnet,** daß die Seitenzone des Topfes (1), die der Seitenzone des Mantels (6) angenähert ist, eine horizontale Schulter (21) aufweist, deren nach unten gerichtete Seite (22) die Nut aufweist.

4. Wasserkessel nach einem der vorangehenden Ansprüche, **dadurch** **gekennzeichnet,** daß der Mantel (6) in seiner den Topf (1) umgebenden Lage durch Befestigungsmittel (24) und Abstandshalter (25) gehalten ist, die zwischen den Böden (3 und 8) von Topf und Mantel angeordnet sind.

5. Wasserkessel nach einem der vorangehenden Ansprüche, **dadurch** **gekennzeichnet,** daß der für den Topf (1) und den Mantel (6) verwendete Kunststoff ein Polypropylen ist.
